(19) **Europäisches Patentamt**

**European Patent Office**

**Office européen des brevets**

(11) Veröffentlichungsnummer: **0 266 803 B1**

# EUROPÄISCHE PATENTSCHRIFT

(45) Veröffentlichungstag der Patentschrift: **20.02.91**

(21) Anmeldenummer: **87117060.1**

(22) Anmeldetag: **08.05.85**

(51) Int. Cl.⁵: **E05B 49/00, B60R 25/02**

(60) Veröffentlichungsnummer der früheren Anmeldung nach Art. 76 EPÜ: **0 164 572**

(54) **Schliesszylinder.**

(30) Priorität: **22.05.84 FR 8407938**

(43) Veröffentlichungstag der Anmeldung:
**11.05.88 Patentblatt 88/19**

(45) Bekanntmachung des Hinweises auf die Patenterteilung:
**20.02.91 Patentblatt 91/08**

(84) Benannte Vertragsstaaten:
**DE FR GB IT SE**

(56) Entgegenhaltungen:
**DE-A- 3 043 591**
**DE-A- 3 306 863**
**GB-A- 2 079 838**
**US-A- 4 090 175**

(73) Patentinhaber: **VALEO NEIMAN**
**12bis, rue Maurice Berteaux**
**F-78290 CROISSY-SUR-SEINE(FR)**

(72) Erfinder: **Lipschutz, Paul**
**12, rue Maurice Berteaux**
**F-78290 Croissy(FR)**

(74) Vertreter: **Cohausz & Florack Patentanwälte**
**Postfach 14 01 61 Schumannstrasse 97**
**D-4000 Düsseldorf 1(DE)**

### Beschreibung

Die Erfindung betrifft einen Schließzylinder, insbesondere für das Lenkschloß eines Kraftfahrzeuges mit einem im Zylindergehäuse drehbar angeordneten Zylinderkern in dessen Längskanal ein schlüsselähnliches Teil einschiebbar ist, durch das der Zylinderkern verdrehbar ist und das mit einer Geberdiode ein Signal abgibt, das von einer am Schließzylinder angeordneten Empfängerdiode oder einem zur Empfängerdiode führenden Fenster empfangen wird um eine Entriegelung zu erzeugen.

Ein solcher Schließzylinder ist aus der deutschen Offenlegungsschrift 33 30 740 bekannt. Hier ist im Zylinderkern ein Hebel gelagert, der durch den Schaft des schlüsselförmigen Teils beweglich ist und eine spiegelnde Fläche trägt, die das vom schlüsselähnlichen Teil abgegebene Signal über ein Fenster im Zylindergehäuse zu einem Empfangsteil in der Schlüsseleinsteckstellung des Zylinderkerns reflektiert. Die Sicherheit eines solchen Schlosses hängt damit nur davon ab, ob das richtige Signal die Empfangsdiode erreicht.

Aus der deutschen Offenlegungsschrift 32 45 681 ist es bekannt, an dem Schaft eines Schlüssels einen Datenträgerring, insbesondere einen Magnetstreifen oder ein Punkt- oder Streifenraster anzuordnen, das abgetastet wird, um ein Signal zu einer Steuereinheit zu geben. Ferner ist es aus der deutschen Offenlegungsschrift 35 05 971 bekannt, an einem Schlüsselkopf einen Kontakt vorstehen zu lassen, der nach Einstecken des Schlüssels in eine bestimmte Drehstellung einen Gegenkonkakt des Schlosses erreicht, um dem Signalgeber des Schlüssels mit einer elektrischen Spannung zu versorgen.

Aufgabe der Erfindung ist es, einen Schließzylinder der eingangs genannten Art so zu verbessern, daß ein Empfang des Signals erst ermöglicht wird, nachdem der Zylinderkern machanisch entsperrt ist.

Diese Aufgabe wird erfindungsgemäß dadurch gelöst, daß die Empfängerdiode oder das fenster an einer Stelle befestigt sind, an der sie durch die Geberdiode nur bei eingestecktem Teil und in einer Drehstellung des Teils unterschiedlich ist, und daß der Zylinderkern Zuhaltungen aufweist, die durch das eingesteckte Teil in die entsperrte Stellung bringbar sind.

Ein solcher Schließzylinder kombiniert in idealer Weise die Vorteile eines mechanischen Schlosses mit denen eines elektronischen. Erst muß durch das schlüsselschaftähnliche Teil der Zylinderkern mechanisch entriegelt werden, ehe das kodierte Signal die Empfängerdiode erreichen kann. Hiermit wird die Schloßsicherheit wesentlich erhöht.

Vorteilhafte Ausgestaltungen der Erfindung sind in den Unteransprüchen angeführt.

Die Erfindung wird gut verständlich beim Lesen der folgenden Beschreibung in bezug auf die beigeheftete Zeichnung, in der:

Fig. 1    eine Querschnittsansicht eines Lenkschlosses nach einem Ausführungsbeispiel der Erfindung ist;

Fig. 2    ist eine Ansicht des Schließzylinders in Fig. 1 im Längsschnitt und

Fig. 3    ist eine Prinzipskizze der Winkelstellungen des Kerns des in Fig. 1 und 2 dargestellten Schließzylinders.

Der Schließzylinder umfaßt einen Geber 1; der mit Infrarotstrahlung, Ultraschall oder Radiowellen etc. arbeiten kann. Ein Zylinderkern 2 des mechanischen Schließzylinders hat einen Sitz 2' für den Geber 1, der eine Rippe 1' mit einem kodierten Einschnitt 9 analog zu dem eines Schlüssels umfaßt. Einer Nocke 1" dient als Bezug für den Einschnitt 9. Der Schließzylinder umfaßt auch ein Zylindergehäuse 3, und Stiftpaare 4-5 mit Stiftfedern 6 werden im Schließzylinder 2-3 durch eine Klappe 7 eingeschlossen und wirken mit dem Einschnitt 9 zusammen, um die Drehung des Zylinderkerns 2 im Zylindergehäuse 3 in üblicher Weise zu ermöglichen.

Der Geber 1 trägt einen Betätigungsknopf 8 und eine Geberdiode 12 (bei Lichtstrahlung), die den kodierten Befehl an eine fest mit dem Zylindergehäuse 3 verbundene Empfängerdiode 13 überträgt. Der Zylinderkern 2 ist fest mit einer Platte 14 verbunden, die mit einem Fenster 12' ausgerüstet ist und bewegliche Kontakte trägt, die mit den festen Kontakten 11, 11' unter der Wirkung einer Feder 15 zusammenwirken. Ein Fenster 12" ist in einem Gehäuse 10 vorgesehen, das mit dem Zylindergehäuse 3 gegenüber der Empfängerdiode 13 fest verbunden ist.

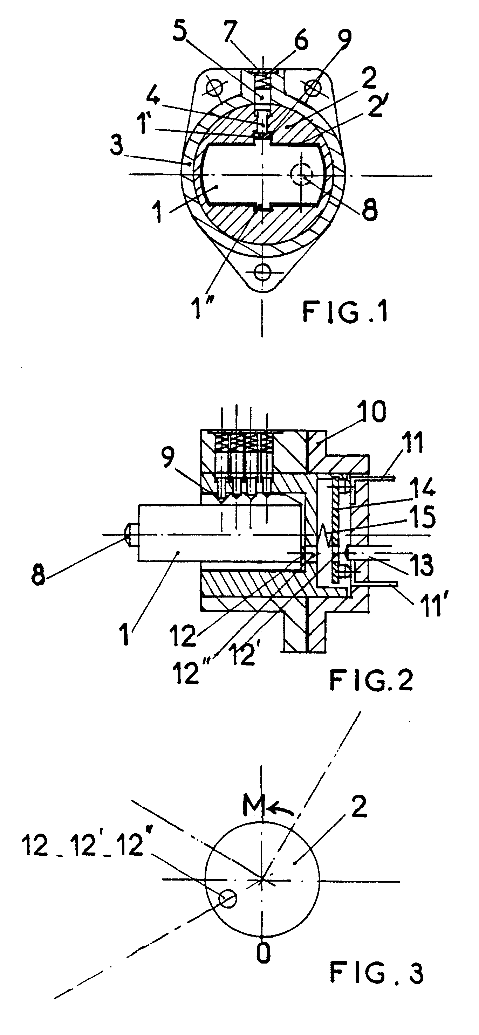

In der Stellung "0" (Fig. 3) kann der Geber 1 in den Sitz 1' eingeführt werden, wobei der Einschnitt 9 mit den Stiften 4-5 zur Freigabe des Zylinderkerns 2 zusammenwirkt. In dieser Stellung befindet sich die Geberdiode 12 nicht gegenüber dem Fenster 12" des Zylindergehäuses 3 und der Empfängerdiode 13. Das Betätigen des Knopfes 8 ermöglicht somit nicht den Durchgang des Signals der Geberdiode 12 an die Empfängerdiode 13.

Nach Drehung des Zylinderkerns 2 bis zur Stellung "Lenksperre" befindet sich die Geberdiode 12 gegenüber der Empfängerdiode 13 durch die Fenster 12' und 12". Das Betätigen des Knopfes 8 ermöglicht die Übertragung des kodierten Befehls von der Geberdiode 12 zur Empfängerdiode 13. Der mit der Diode 13 verbundene Empfänger (nicht dargestellt) betätigt jetzt die elektromechanische Entriegelung des Schließzylinders. Wenn dann der Zylinderkern 2 weitergedreht wird, erhält man die notwendigen elektrischen Kontakte, wie z.B. "Acc" (Accessoires = Zubehör), "M" (Marche normale = Fahrtstellung), "Demar" (Demarreur = Anlaßstellung). Die Geberdiode 12 befindet sich bei diesen Bewegungen nicht mehr gegenüber der Empfängerdiode 13, und jede Betätigung des Knopfes 8 bleibt ohne Wirkung.

Dreht man den Zylinderkern in entgegengesetztem Sinne bis zur Stellung "Lenksperre" zurück, wird durch Drücken des Knopfes 8 die Verriegelung des Schließzylinders bewirkt. Dann wird bei Rückkehr in die Stellung "0" das Abziehen des Gebers 1 möglich.

## Ansprüche

1. Schließzylinder, insbesondere für das Lenkschloß eines Kraftfahrzeuges mit einem im Zylindergehäuse (3) drenbar angeordneten Zylinderkern (2) in dessen Längskanal ein schlüsselähnliches Teil (1) einschiebbar ist, durch das der Zylinderkern (2) verdrenbar ist und das mit einer Geberdiode ein Signal abgibt, das von einer am Schließzylinder angeordneten Empfängerdiode (13) oder einem zur Empfängerdiode führenden Fenster (12") empfangen wird um eine Entriegelung zu erzeugen, **dadurch gekennzeichnet,** daß die Empfängerdiode oder das Fenster an einer Stelle befestigt sind, an der sie durch die Geberdiode (12) nur bei eingestecktem Teil (1) und in einer Drehstellung des Teils (1) erreichbar sind, die von der Einsteckdrehstellung ("0") unterschiedlich ist, und daß der Zylinderkern (2) Zuhaltungen (4, 5) aufweist, die durch das eingesteckte Teil (1) in die entsperrte Stellung bringbar sind.

2. Schließzylinder nach Anspruch 1, **dadurch gekennzeichnet,** daß an der Empfängerdiode (13) ein Empfänger angeschlossen ist, der die Verriegelung und Entriegelung des Schließzylinders steuert.

3. Schließzylinder nach Anspruch 1 oder 2, **dadurch gekennzeichnet,** daß die Geberdiode (12) codierte Infrarotsignale abgibt.

4. Schließzylinder nach einem der vorherigen Ansprüche, **dadurch gekennzeichnet,** daß das Teil (1) an der Außenseite Einschnitte (9) für die Zuhaltungen (4) des Zylinderkerns (2) aufweist.

## Claims

1. A lock cylinder, in particular for a steering column lock of a motor vehicle, comprising, in a cylinder housing (3), a rotatably arranged cylinder core (2) in the longitudinal channel of which a key-like element (1) can be pushed, by means of which the cylinder core (2) can be rotated and which delivers a signal by means of an emitting diode which is received by a receiver diode (13) located in the lock cylinder, or by a window (12") leading to the receiver diode, in order to cause unlocking, characterized in that the receiver diode or the window is fixed in a position in which it can be reached by the emitting diode (12) only when the element (1) is inserted and is in a rotational position of the element (1) which differs from the insertion position ("0") and in that the cylinder core (2) comprises tumblers (4, 5) which can be brought into the unlocked position by means of the inserted element (1).

2. A lock cylinder according to Claim 1, characterized in that a receiving device is connected to the receiver diode (13) which controls the locking and unlocking of the lock cylinder.

3. A lock cylinder according to Claim 1 or 2, characterized in that the emitting diode (12) produces a coded infrared signal.

4. A lock cylinder according to any one of the preceding Claims, characterized in that the element (1) comprises recesses (9) for the tumblers (4) of the cylinder core (2) in its outside.

## Revendications

1. Verrou à barillet, en particulier pour l'antivol d'un véhicule automobile, comprenant un rotor (2) tourillonnant dans un stator (3) dans le canal longitudinal duquel une pièce (1) en forme de clé peut être introduite par laquelle le rotor peut être entraîné en rotation et qui est munie d'une diode émettant un signal lequel est reçu soit par une diode réceptrice (13) monté dans le verrou soit par une fenêtre (12") pour produire un déverrouillage, caractérisé en ce que la diode réceptrice ou la fénêtre sont fixées à un endroit auquel elles ne peuvent être atteintes, par la diode émettrice (12), que lorsque la pièce (1) est introduite et mise dans une position angulaire différente de la position angulaire d'introduction ("0") et en ce que le rotor (2) comporte des moyens d'arrêt (4,5) qui, par l'introduction de ladite pièce (1), peuvent être amenés dans la position de déverrouillage.

2. Verrou selon la revendication 1, caractérisé en ce que la diode réceptrice est associé un récepteur qui commande le verrouillage et le déverrouillage du verrou.

3. Verrou selon la revendication 1 ou 2, caractérisé en ce que la diode émettrice (12) émet des signaux infrarouges codés.

4. Verrou selon l'une des revendications précédentes, caractérisé en ce que la pièce (1) comporte à son extérieur des crantages (9) pour les moyens d'arrêt (4) du rotor (2).

EP 0 266 803 B1

FIG.1

FIG.2

FIG.3

5